Europäisches Patentamt

European Patent Office

Office européen des brevets

(11) Publication number: **0 068 716**
A1

# EUROPEAN PATENT APPLICATION

(21) Application number: **82303114.1**

(51) Int. Cl.³: **A 01 K 1/02**

(22) Date of filing: **16.06.82**

(30) Priority: **25.06.81 JP 97476/81**

(43) Date of publication of application: **05.01.83 Bulletin 83/1**

(84) Designated Contracting States: **DE FR GB NL**

(71) Applicant: **C. ITOH FEED MILLS CO., LTD., 9-6, Kaji-cho 2-chome, Chiyoda-ku Tokyo (JP)**

(72) Inventor: **Kawakami, Ryusi, 21-47, Toyoura Kuroiso-shi, Tochigi-ken (JP)**
Inventor: **Masumura, Tadahiro, 7-10, Yutaka-cho Kuroiso-shi, Tochigi-ken (JP)**

(74) Representative: **Bond, Bentley George et al, HASELTINE LAKE & CO. Hazlitt House 28 Southampton Buildings Chancery Lane, London, WC2A 1AT (GB)**

(54) **Pen for the delivery and nursing of livestock.**

(57) In known farrowing pens having a central sow pen and two piglet pens provided on the sides of the sow pen, the floor height of the sow pen is equal to or sligthly lower than the floor height of the piglet pens, and the width of the sow pen is sufficiently large to permit the sow to stand up or lie down easily. According to the present invention, the floor height of the sow pen (1) is higher than the floor height of the piglet pens (2), and the width of the sow pen (1) is the minimum required to allow the sow to lie down or slightly larger than that. This arrangement protects piglets against being crushed to death by the sow, and enables them to have an equal opportunity of taking the sow's milk. The invention is applicable to other livestock animals.

-1-

## PEN FOR THE DELIVERY AND NURSING OF LIVESTOCK

This invention relates to a fenced pen for the delivery and nursing of livestock, such as a farrowing pen for swine.

A known farrowing pen for swine comprises a sow pen and a piglet pen provided on each of the two sides of the sow pen. All of the pens have an equal floor height. Alternatively, the piglet pens have a higher floor level than the sow pen, since they have a heat insulation mat placed on the floor. Each piglet pen is divided from the sow pen by a side fence usually comprising a pair of vertically-spaced horizontal bars. The distance between the side fences, or in other words the width of the sow pen, is sufficiently large to permit the sow to stand up or lie down easily.

In such a farrowing pen, when the sow lies down, a piglet is sometimes crushed to death under its mother, or when the sow stands up, she sometimes kicks or treads on a piglet with her hind leg, to cause it to die. The death of piglets from the pressure of their mother has long been a serious problem. The more complete separation of the piglet pens from the sow pen, the provision of heat insulation mats in the piglet pens, and other measures have, therefore, been taken to keep piglets away from their mother as far as possible. Nevertheless, a considerably large number of piglets are crushed, and swine producers have had a lot of difficulty in protecting piglets.

A sow lies down when suckling her piglets. She usually offers the upper row of nipples to her piglets first, and then the lower row of nipples. Accordingly, it is impossible for all of the piglets to take the mother's milk at one time, resulting in a difference in the rate of their growth.

According to the present invention there is provided a pen for the delivery and nursing of livestock, the pen comprising a pen for the mother animal and a pair of pens for newborn animals, one of the latter pens being provided on each of the two sides of said pen for the mother animal and being divided by a fence therefrom, characterised in that said pen for the mother animal has a floor located at a level which is higher than that of the floor of each of said pens for newborn animals, that said floor of said pen for the mother animal is divided by a shoulder from said floor of each of said pens for newborn animals, and that said floor of said pen for the mother animal has a width which is the minimum required to allow the mother animal to lie thereon or slightly greater than that, while said fences have a distance therebetween which is just large enough to allow said mother animal to stand up or lie down.

The pen of the invention protects baby animals such as piglets against being crushed to death by their mother, and enables them to have an equal opportunity of taking the mother's milk.

The invention will now be described, by way of example, with reference to the drawings, in which:

Figure 1 is a perspective view of a farrowing pen for swine and

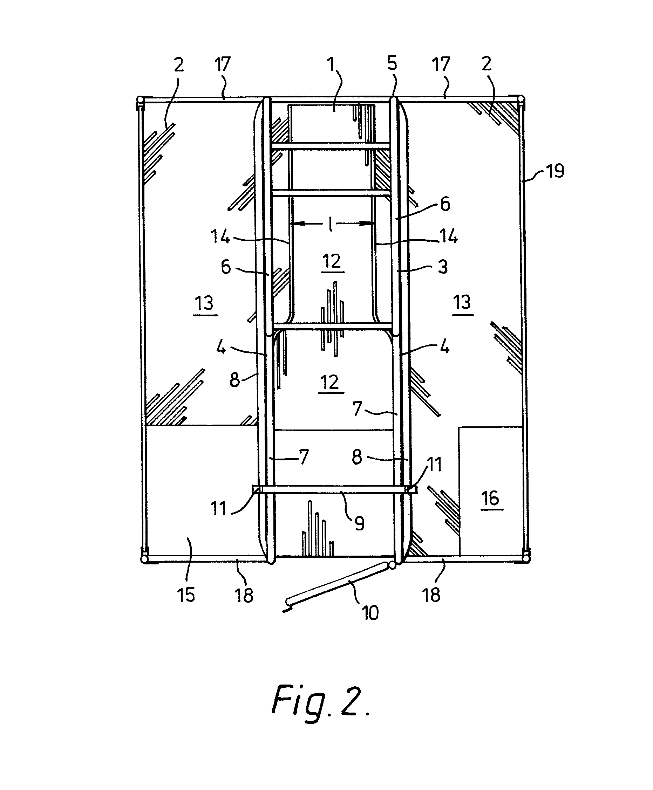

Figure 2 is a top plan view thereof.

The farrowing pen comprises a central sow pen 1 and a piglet pen 2 located on each of the two sides of the sow pen.

The sow pen is defined by a partition fence 3 of whole frame construction and which comprises a pair of side fences 4 dividing the sow pen from the piglet pens 2, four posts 5, and an upwardly projecting front frame 6. Each side fence 4 comprises two vertically-spaced horizontal bars 7 and 8. Each upper bar 7 is at a height which generally corresponds to the centre of the body of a sow in her standing position. The upper bars 7 are spaced apart by a distance which is slightly greater than the width of the body of the sow. The lower bars 8 are at a height which generally corresponds to that of the centre of the body of the sow in her lying position. The lower bars 8 are spaced apart by a distance which is sufficiently large to provide a space in which the sow can lie. The distance between the lower bars 8 is slightly greater than the distance between the upper bars 7.

This spacing between the side fences 4, which is the minimum required to enable the sow to stand up or lie down, or slightly greater, is one of the important features of this invention. This feature prevents any sudden movement of the sow that may cause crushing to death of her piglets, and also enables the sow to lie in a fixed position in which her nipples are located adjacent to shoulders 14. There is no other limitation in particular to the side fences 4 if their spacing is as set forth above, and if piglets are free to move under the side fences 4. Accordingly, it is, for example, possible to employ more fence bars, or provide vertical bars by which the horizontal bars are connected to one another.

The upwardly projecting frame 6 is provided to prevent escape of the sow from the sow pen.

A transversely extending rump stop fence member 9 is provided adjacent to the rear ends of the side fences 4. The stop member 9 prevents the sow from having her rump strike against door 10, and also serves to narrow the area in which the sow can move, so that the piglets may be protected from being crushed to death by the sow. The stop member 9 also forms a passage which enables the piglets to move between the two piglet pens 2. The stop member 9 is positionally adjustable to suit the body length of the sow, and is fixed to the side fences 4 by pins 11.

Another important feature of the farrowing pen according to this invention resides in the floor of the sow pen 1. The sow pen has a floor 12 having a height which is higher than that of the floors 13 of the piglet pens. The floor 12 of the sow pen has a width 1 which is the minimum required to permit the sow to lie, or lightly greater. The width 1 may be in the range of 50 to 70 cm for a sow of average size. This width limitation, and the limited distance between the side fences 4, force the sow to lie down slowly, so that the piglets can escape, or be pushed aside into the piglet pens 2 having a lower floor level before the sow lies down, whereby the crushing to death of the piglets by the body of the sow is prevented. The shoulders 14 permit the piglets to have access to the lower row of the sow's nipples, as well as the upper row, so that all the piglets can take milk at a time.

According to the embodiment shown in the drawings, the floor of the sow pen has a somewhat narrower width in its front portion than in its rear portion, since the distance between the hind legs of a sow is greater than that between her forelegs.

The shoulder 14 may have a height of 1 to 15 cm, preferably 2 to 5 cm, if the pen is intended for swine. The shoulder 14 does not necessarily need to define a right angle, but the slope of the shoulder 14 should not be too gentle. Suitable angles of the shoulder 14 towards the horizontal are angles greater than $30^\circ$, preferably greater than $60^\circ$. It is preferable for each shoulder 14 to have a rounded corner so as not to injure the sow or piglets.

The floors may be made of any material employed for known farrowing pens, for example, wooden plates, concrete, steel plates, plastic-coated metal wire netting, plastic flooring materials, or elastic flooring materials. The floors of the farrowing pen shown in the drawings are slatted floors formed by a multiplicity of steel strips having a width of 30 mm, and laid close to one another at intervals of 8 mm. The slats forming the floor of the sow pen 1 extend longitudinally thereof, while the slats forming the floor of each piglet pen 2 lie at an angle to the sow pen. The inclination of the slats in the floors of the piglet pens prevents the sow from engaging her hooves in the slats in the floor of the piglet pens when she stands up, so that she may not kick away her piglets. In this connection, suitable angles of the inclined slats are in the range of $20^{\circ}$ to $60^{\circ}$ toward the longitudinal direction of the sow pen.

In the embodiment shown in the drawings, the floor of each piglet pen 2 is provided at its rear end with a rectangular recess 15 or 16 in which a heat insulation mat may be placed.

The front and rear ends of the farrowing pen are conventional. In the embodiment shown, each piglet pen 2 is provided with a front fence 17 and a rear fence 18 which are removable. A door 10 is provided at the rear end of the piglet pen 1, while a feeder and a waterer (not shown) may be provided at the front end thereof.

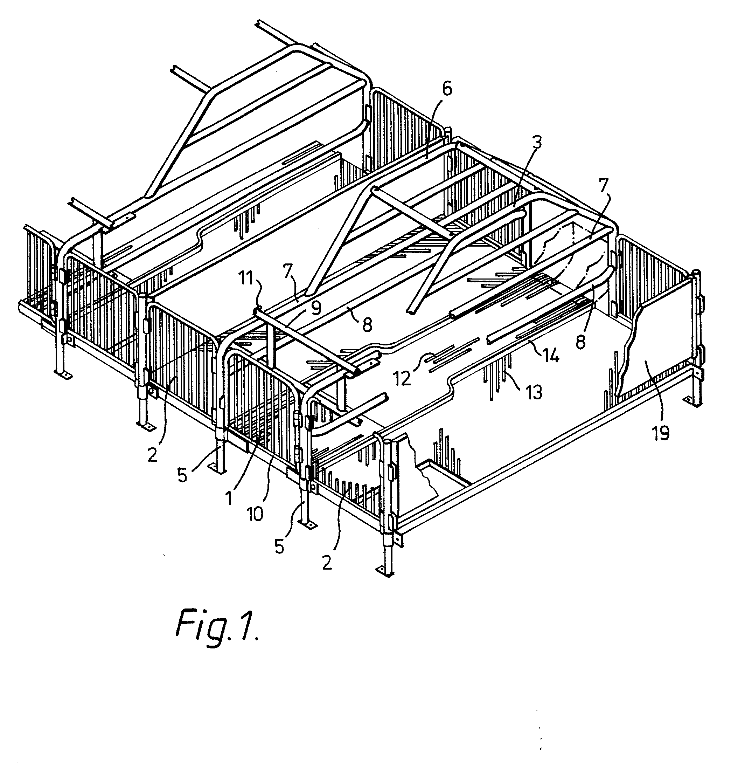

A plurality of farrowing pens according to this invention may be joined transversely to one another. Thus, Figure 1 shows by way of example another unit joined to the left-hand side of the farrowing pen hereinabove described. The units are separated by partitions 19.

In a conventional farrowing pen, the rate of death of piglets by crushing increases with an increase in the number of piglets, particularly when eight or more piglets are born. The farrowing pen shown in the drawings markedly reduces the rate of death by crushing. The farrowing pen shown in the drawings also reduces considerably the difference in the weight of weaning piglets, whereas this difference is great among piglets reared in a conventional farrowing pen.

The pen described above with reference to the drawings is a farrowing pen for swine. The dimensions of the pen can however be adapted for use with other animals, such as other livestock animals, domestic animals and farm animals.

In order to improve the legibility of the drawings, the slats of the slatted floors 12 and 13 are only partially drawn in the drawings.

CLAIMS

1. A pen for the delivery and nursing of livestock, the pen comprising a pen for the mother animal and a pair of pens for newborn animals, one of the latter pens being provided on each of the two sides of said pen for the mother animal and being divided by a fence therefrom, characterised in that said pen for the mother animal has a floor located at a level which is higher than that of the floor of each of said pens for newborn animals, that said floor of said pen for the mother animal is divided by a shoulder from said floor of each of said pens for newborn animals, and that said floor of said pen for the mother animal has a width which is the minimum required to allow the mother animal to lie thereon or slightly greater than that, while said fences have a distance therebetween which is just large enough to allow said mother animal to stand up or lie down.

2. A pen as claimed in claim 1, being a farrowing pen for swine.

3. A farrowing pen as claimed in claim 2, wherein the height of said shoulder is in the range of 1 to 15 cm.

4. A farrowing pen as claimed in claim 2 or 3, wherein said floor of said pens for newborn animals is a slatted floor whose slats lie at angle to the pen for the mother animal.

5. A farrowing pen as claimed in claim 4, wherein said angle is in the range of $20^{\circ}$ to $60^{\circ}$ towards the longitudinal direction of the pen for the mother animal.

Fig.1.

*Fig.2.*

## DOCUMENTS CONSIDERED TO BE RELEVANT

| Category | Citation of document with indication, where appropriate, of relevant passages | Relevant to claim |
|---|---|---|
| X | US - A - 3 084 668 (P.H. McMURRAY et al.) <br> * column 1, line 10 to column 2, line 32; fig. 2 * <br> -- | 1,2 |
| A | US - A - 2 881 734 (W.D. HINES) <br> * column 3, line 50 to column 4, line 14; fig. 2, 6 * <br> -- | 1,2 |
| A | GB - A - 2 026 832 (A.G. WALES) <br> * abstract; fig. 3 * <br> ----- | 1,2 |

**CLASSIFICATION OF THE APPLICATION (Int. Cl. 3)**

A 01 K 1/02

**TECHNICAL FIELDS SEARCHED (Int.Cl. 3)**

A 01 K 1/02

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| Berlin | 16-08-1982 | SCHOFER |

EPO Form 1503.1 06.78